Europäisches Patentamt

European Patent Office

Office européen des brevets

(11) Numéro de publication : **0 299 046 B1**

(19)

(12) # FASCICULE DE BREVET EUROPEEN

(45) Date de publication du fascicule du brevet :
**08.07.92 Bulletin 92/28**

(51) Int. Cl.⁵ : **G05B 19/405**

(21) Numéro de dépôt : **88901423.9**

(22) Date de dépôt : **28.01.88**

(86) Numéro de dépôt international :
**PCT/FR88/00048**

(87) Numéro de publication internationale :
**WO 88/05936 11.08.88 Gazette 88/18**

(54) **TOUR D'OUTILLAGE POURVU DE MOYENS DE COMMANDE PERFECTIONNES.**

(30) Priorité : **30.01.87 FR 8701430**

(43) Date de publication de la demande :
**18.01.89 Bulletin 89/03**

(45) Mention de la délivrance du brevet :
**08.07.92 Bulletin 92/28**

(84) Etats contractants désignés :
**AT BE CH DE FR GB IT LI LU NL SE**

(56) Documents cités :
**EP-A- 0 060 039**
**FR-A- 2 577 699**
**GB-A- 2 094 023**

(73) Titulaire : **SOMAB S.A.**
**6, boulevard Nomazy**
**F-03000 Moulins (FR)**

(72) Inventeur : **PINARD, Jean-Claude**
**Le Bourg Thiel-sur-Acolin**
**F-03230 Chevagnes (FR)**
Inventeur : **JACQUARD, Bernard**
**23, rue de Marcellanges**
**F-03400 Yzeure (FR)**
Inventeur : **BESANCON, André**
**Les Airelles no12**
**F-03000 Moulins (FR)**

(74) Mandataire : **Chanet, Jacques**
**B.P. 27 95bis avenue de Royat**
**F-63400 Chamalières (FR)**

EP 0 299 046 B1

## Description

La présente invention est du domaine des machines et plus particulièrement des tours et elle a pour objet un tour d'outillage à déplacement d'outil programmable.

On rappelle qu'un tour est une machine-outil essentiellement d'un bâti supportant à une extrémité une partie, dite poupée fixe, qui supporte elle-même un mandrin par l'intermédiaire d'une broche et d'une partie, dite banc, constituée d'un couple de glissières, dit coulisse, parallèles entre elles et parallèles à l'axe de la broche. Sur les glissières est montée une poupée mobile comportant une contre-pointe d'axe confondu avec celui de la broche ; la poupée mobile peut être déplacée le long de la coulisse et y être fixée en un point quelconque ; la coulisse supporte aussi et guide un ensemble mobile porte outil dit "trainard".

On rappelle qu'on appelle "tours parallèles" des tours dans lesquels les mouvements de l'outil, tant dans le sens (x) perpendiculaire à l'axe de la broche que dans le sens (z) parallèle à l'axe de broche, sont liés à la rotation (n) du mandrin ; parmi ces tours parallèles on distingue le tour dit universel ou d'outillage qui sert à diverses fonctions qui le rendent universel.

On connaît aussi des tours à copier qui forment une variété de tours semi-automatiques et dans lesquels la pièce à usiner placée entre-pointes est usinée par un outil qui se déplace automatiquement en suivant un profil imposé par un reproducteur ; la pointe de l'outil décrit donc une trajectoire qui reproduit le profil ; ce dernier peut être soit une tôle profilée, soit un exemplaire de la pièce usinée.

On connaît encore des tours à copier dits "cyclés" grâce auxquels l'outil effectue des passes successives conformes au profil de copiage en revenant à son point de départ après chaque passe tandis que la trajectoire de l'outil est, d'une passe à l'autre et en début de passe rapprochée, de la trajectoire finale reproduisant le profil aux cotes en diamètre final de la pièce usinée ; pour ce faire, le profil de guidage est translaté d'une passe à l'autre de l'épaisseur du copeau jusqu'à obtention des cotes en diamètre final de la pièce ; en définitive, les interventions manuelles se bornent à placer une ébauche dans le mandrin et à retirer la pièce usinée.

On notera que dans les tours à copier, y compris les tours à copier cyclés, il n'est pas connu, au moins de la Demanderesse, que le profil soit modifiable sans être demonté du tour.

On connaît enfin des tours dont la trajectoire de l'outil est programmable par des moyens relevant de la micro-électronique et de l'informatique ; cependant ces tours, dits à commande numérique, imposent un travail de programmation très long donc très couteux et exigent des personnels qualifiés en la matière, et sont pour cette raison, réservés à la production en série.

Dans d'autres applications des moyens électroniques à la commande des machines-outils, on connaît par le document EP-A-0060039 un centre d'usinage comportant des moyens de mémorisation des données et de recopiage, et par le document FR-A-2577699 une rectifieuse à commande numérique avec des moyens de saisie et d'affichage de données distinguant les parties à usiner et les parties ne devant pas l'être ; la programmation ne permet que des déplacements de l'outil (meule) suivant un axe X ou un axe Z.

L'idée de l'invention est née de la constatation qu'existaient actuellement dans les ateliers de mécanique générale, des tours d'outillage dont la plupart sont des machines assez anciennes, car l'évolution de la technique a amené les constructeurs vers une fabrication de machines plus sophistiquées à commande numérique ; cette orientation est la conséquence de l'évolution de la demande de machines de plus en plus productives. Cependant les machines conventionnelles ont toujours leur place sur le marché et seules les machines âgées et précises sont conservées en service. Une partie du renouvellement de ce parc est actuellement assurée par des machines assez bon marché mais qui ne donnent pas au mécanicien exigeant entière satisfaction quant à la fiabilité. La crise économique a retardé le renouvellement du parc des tous d'outillage lorsque la rénovation de l'industrie conduit à un besoin de plus en plus grand de ces machines ; des tours d'outillage de conception moderne devront répondre à la demande des utilisateurs recherchant des machines fiables et précises, d'utilisation très simplifiée et d'un prix raisonnable.

Un but de la présente invention est de proposer aux tourneurs un tour d'outillage qui permette de pré-définir simplement et rapidement un profil d'usinage et, celui-ci étant pré-défini, d'opérer à la manière des tours à copier y compris des tours à copier cyclés. Un autre but de l'invention est de procurer au tourneur le moyen de visualiser les cotes, ou paramètres du profil d'usinage qu'il a prédéfini.

Un autre but de l'invention est de proposer au tourneur un tour qui bien que comportant des moyens permettant un certain automatisme des opérations, puisse aussi bien être utilisé de la façon manuelle classique.

L'idée-mère de la présente invention a donc consisté à doter un tour parallèle à copier de moyens de définitions et de modifications rapides et simples du profil de copiage. Un autre aspect de l'idée-mère de l'invention est de décomposer un profil de copiage en profils élémentaires pour permettre, à partir de ces profils élémentaires, de définir un profil d'usinage, ou trajectoire de l'outil, complexe.

Par trajectoire élémentaire, on entend traditionnellement le chariotage, le dressage, la passe conique ou interpolation linéaire, la passe en rayon ou interpolation circulaire, la passe de filetage, avec une forte avance de l'outil. Par trajectoire complexe, on entend la succession de trajectoires élémentaires, par exemple trajectoire conique suivie d'un rayon suivi d'une autre trajectoire conique.

L'idée-mère telle que sus-définie peut être réalisée selon deux modes distincts.

Suivant un premier mode de réalisation, dit analogique, on pourrait disposer les profils élémentaires sous forme de gabarits dans une boîte dans laquelle ils seraient manoeuvrables et escamotables par des moyens mécaniques pour permettre au tourneur de réaliser le profil complexe désiré ; ce profil complexe pourrait servir de commande, à un galet agissant directement ou indirectement sur l'outil ; en outre à chaque passe, le profil pourrait être déplacé. On conçoit cependant que ces moyens analogiques, bien que techniquement réalisables, présenteraient une certaine difficulté de réalisation.

Suivant un second mode de réalisation dit logique, ou numérique, on définit numériquement les trajectoires élémentaires ou les trajectoires complexes, on repère numériquement les coordonnées de l'outil et on les compare à la trajectoire définie ; les moyens de calcul numérique et de comparaison connus en eux-mêmes dans les techniques de micro informatique permettent, avec beaucoup d'autres avantages, d'assurer les fonctions des moyens analogiques précités. C'est ce deuxième type de solution qui a été choisi pour réaliser l'idée-mère de l'invention.

Ainsi et selon l'invention, un tour d'outillage, c'est-à-dire du genre de tour, dit parallèle dans lequel l'avance de l'outil est fonction de la rotation (n) du mandarin, permettant de réaliser notamment les opérations de chariotage (déplacement de l'outil parallèle à l'axe de broche) de dressage (déplacement de l'outil perpendiculaire à l'axe de broche), d'interpolation linéaire, de filetage (déplacement rapide de l'outil en proportion de l'angle de rotation de la broche), de raccordement de cônes (succession d'une interpolation linéaire, d'une interpolation circulaire partielle et d'une seconde interpolation linéaire), ledit tour mettant en oeuvre des moyens de calcul et de commande numériques connus en eux-mêmes, placés sous la dépendance d'un clavier à touches, et réunis en un centre calculateur-opérateur, dit encore processeur ou automate, pour provoquer les déplacements de l'outil, ledit tour d'outillage pouvant comporter en outre des moyens de copiage et de cyclage, est caractérisé d'une manière générale en ce qu'il comporte des moyens, dits premiers, pour sélectionner au moins un profil d'usinage, ou trajectoire de l'outil, parmi une pluralité de trajectoires élémentaires comprenant le chariotage, le dressage, la trajectoire à interpolation linéaire et la trajectoire à interpolation circulaire, le filetage, des moyens, dits deuxièmes, pour, l'outil ayant été amené manuellement au moyen d'un couple de manivelles dans une position initiale, appeler un, ou successivement plusieurs, paramètres de cette trajectoire dans le groupe de paramètres comprenant une longueur de chariotage, un diamètre final de passe de dressage, un angle de cône, un rayon d'usinage, un pas (avance par tour) de filetage, et pour, à la suite de l'appel d'un paramètre, introduire la valeur numérique de ce paramètre, des moyens, dits troisièmes, pour visualiser le type de profil d'usinage sélectionné, le ou les paramètres appelés et leurs valeurs numériques introduites, enfin des moyens, dits manipulateur, pour, un profil d'usinage au moins ayant été sélectionné et l'outil étant dans la position initiale, déclencher le déplacement de l'outil sur sa trajectoire ou inversement l'arrêter en un point quelconque de celle-ci.

De préférence, le tour de l'invention comporte en outre des moyens, dits quatrièmes, pour combiner au moins deux desdites trajectoires élémentaires et sélectionner ainsi une trajectoire complexe, lesdits quatrièmes moyens étant sous la dépendance d'une touche dudit clavier.

De préférence encore, rappelant que l'outil de tournage est habituellement constitué par une plaquette en alliage dur ayant un certain rayon, et d'un porte plaquette en alliage résilient, le tour de l'invention incorpore des moyens, dits cinquièmes, pour introduire dans l'automate le rayon de la plaquette, les cinquièmes moyens étant sous la dépendance d'au moins une touche du clavier.

De préférence encore, le tour de l'invention incorpore des moyens, dits sixièmes, de mémorisation pour, une première série d'opérations ayant été réalisée sur une ébauche, mémoriser l'ensemble des mouvements de l'outil et pour, une autre ébauche sensiblement identique à la première ayant été mise à la place de la première, reproduire sur cette autre ébauche l'ensemble des mouvements mémorisés.

Suivant une disposition avantageuse de l'invention, l'ensemble des moyens de commandes de la disposition de l'opérateur ainsi que les moyens de visualisation sont supportés par l'ensemble mobile dit trainard ; ces moyens de commandes sont répartis sur un pupitre divisé en deux tableaux : l'un des tableaux comprend lui-même trois claviers et un registre de poussoirs et de manettes, l'autre tableau est constitué par un registre de poussoirs et de manettes destiné à la mémorisation, ou apprentissage, et à l'utilisation de la mémoire. L'un des claviers, dit de sélection des profils d'usinage, comprend une première pluralité de touches superposées au dessin d'une pièce usinée suivant tous les profils cités plus haut, une touche étant associée à un profil. Un autre clavier dit d'appel des paramètres comprend une seconde pluralité de touches, associées chacune soit à un paramètre, soit à une opération particulière (validation, annulation, chanfrein à 45°). Un troisième clavier, dit d'introduction des valeurs numériques, comprend une troisième pluralité de touches associées chacune respectivement à un chiffre du système décimal, à la ponctuation, à l'attribut-ion du caractère négatif. Ces moyens de commande comprennent aussi les manivelles, le manipulateur et les poussoirs "Marche-Arrêt".

Les moyens de commandes sus-décrits constituent, avec l'automate, auxquels ils sont associés, l'ensemble des moyens, des premiers aux sixièmes, cités plus haut ; bien entendu, l'automate est soumis à un programme, ou logiciel, qui n'entre pas dans l'objet de la présente description.

On notera aussi qu'un aspect de l'invention est celui du choix des profils sélectionnables, du choix du paramètre, de la disposition claire des claviers, du choix de la séquence simple et sûre des commandes, de la faculté laissée à l'opérateur d'opter, suivant le travail qu'il a à accomplir, entre une commande purement manuelle classique des opérations, et une commande automatique, avec un certain nombre d'opérations intermédiaires.

Suivant une disposition constructive préférée, l'outil est mû dans chacune des directions x,z par respectivement un moteur d'axe piloté en boucle fermée commandé par l'automate.

Le tour de l'invention ayant vocation à être universel, il sera doté de moyens lui assurant une précision aussi élevée que celle attendue des tours d'outillage les plus précis, et cette précision ne devra pas être limitée par la conception proprement mécanique du tour ; à cette fin, il est proposé un montage particulier du banc sur ses socles et des moyens particuliers de blocage de la poupée fixe.

Ainsi et rappelant que dans les tour d'outillage cités plus haut la coulisse du trainard peut être supportée par un banc en un matériau composite du genre "granit naturel" ou granit reconstitué, le banc, selon l'invention, a une forme en L dont une partie, dite porte-coulisse, a son grand axe orienté horizontalement, et dont une autre partie dite porte-mandrin ou "poupée fixe" a son grand axe perpendiculaire au précédent, la face supportant les glissières, dites coulisses, de la partie porte-coulisse étant en regard de la partie porte-mandrin et perpendiculaire au dit grand axe de cette dernière, le plan de ladite face formant avec le plan horizontal un angle de 60° environ ; en outre le banc repose sur un couple de socles en béton hydraulique, chaque socle étant pourvu d'une encoche pour loger le banc, des joints en élastomère étant disposé entre les faces en appui, l'appui forcé du banc sur ses socles étant réalisé aux moyen de vis. Il résulte de cette ensemble de dispositions une structure particulièrement rigide et stable des parties fixes du tour ce qui permet une très grande précision de celui-ci.

Ainsi encore et rappelant que la poupée mobile d'un tour d'outillage peut être déplacée le long des glissières ou inversement être immobilisé sur celles-ci, suivant l'invention, l'immobilisation de la poupée mobile résulte, la poupée servant d'appui, d'une traction sur la face inférieure des glissières dans un sens d'éloignement par rapport au banc ; plus précisément, l'immobilisation de la poupée résulte d'une pression exercée sur l'une des glissières, dite pentée, et le long de deux arêtes opposées de celle-ci, par deux tampons à rainure en V, l'un des tampons, dit bride, étant destiné à prendre appui sur les faces dites respectivement inférieure et extérieure de ladite glissière pentée, l'autre des tampons, dit tampon immobilisateur, étant destiné à faire pression sur les faces dites respectivement intérieure et supérieure de ladite glissière pentée, ledit tampon immobilisateur étant monté en palonnage simple en bout d'un arbre fileté vissable dans un trou taraudé du bâti de poupée et pourvu d'un levier de vissage.

La présente invention sera mieux comprise et des détails en relevant apparaîtront à la description qui va être faite d'une forme particulière de réalisation en relation avec les figures des planches annexées, dans lesquelles :

– la fig.1 est une représentation en perspective d'un tour de l'invention permettant de situer un certain nombre de caractéristiques,

– la fig.1a illustre en détail une manette de la figure précédente,

– la fig.2 illustre un tableau de commandes avec clavier, du tour de la fig.1,

– les fig.2a à 2e sont des courbes illustrant le fonctionnement du tour de la fig.1 tandis que

– Les fig.3 à 6 sont des représentation schématiques sous divers angles du montage du banc, sur ses socles, et

– la fig.7 est une coupe par un plan vertical perpendiculaire à l'axe du banc de la poupée mobile sur sa coulisse.

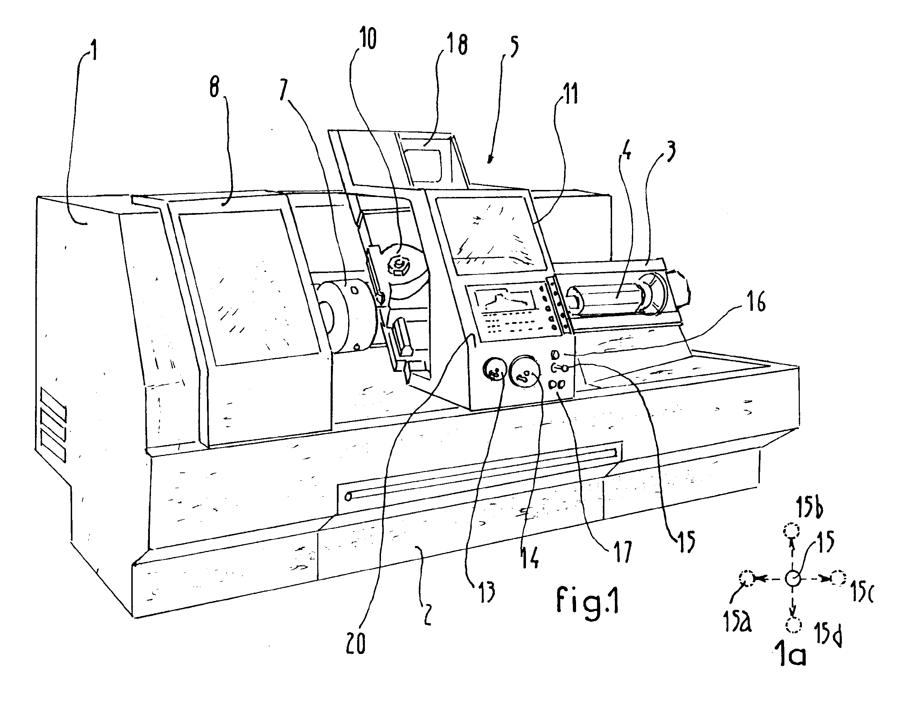

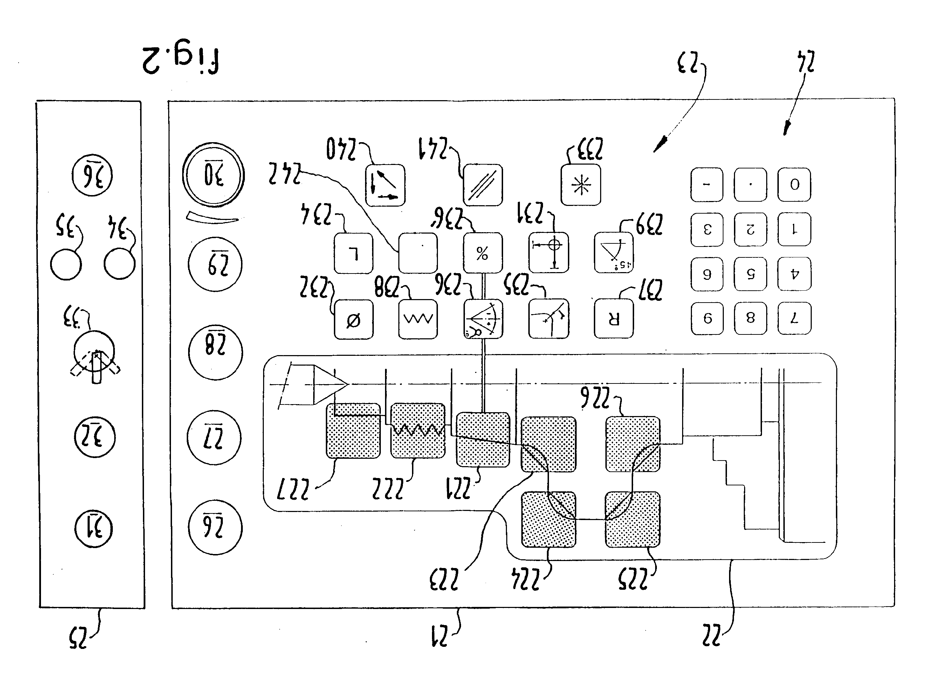

Sur la fig.1, un tour de l'invention comprend, visibles de l'extérieur, un bâti carrossé 1 avec tiroir à copeaux 2, un banc 3 supportant la poupée mobile 4, un ensemble mobile 5, dit trainard, et une poupée fixe supportant un mandrin 7 pouvant être caché par un protecteur mobile 8. L'équipement mobile 5, monté sur le trainard, comprend principalement un porte outil 10, un protecteur vitré 11, un couple de manivelles 13,14 respectivement transversale pour le dressage et longitudinale pour le chariotage, un manipulateur 15 à cinq positions dont une position centrale d'arrêt (fig.1a), un écran de visualisation 18 et un pupitre de commande 20. Un poussoir 16 permet de faire défiler, à chaque poussée, un coefficient démultiplicateur de l'avance (1 puis 0,1, puis 0,01, puis 1, etc...) ; un couple de poussoirs 17 commande la marche ou l'arrêt du tour. On notera que de façon caractéristique tous les organes de contrôle et de commande sont supportés par l'équipement mobile 5 ; il résulte de cette disposition que le tourneur peut suivre visuellement l'évolution de la pièce en cours d'usinage avec, à sa portée, tous les moyens pour controler, arrêter ou modifier cette évolution.

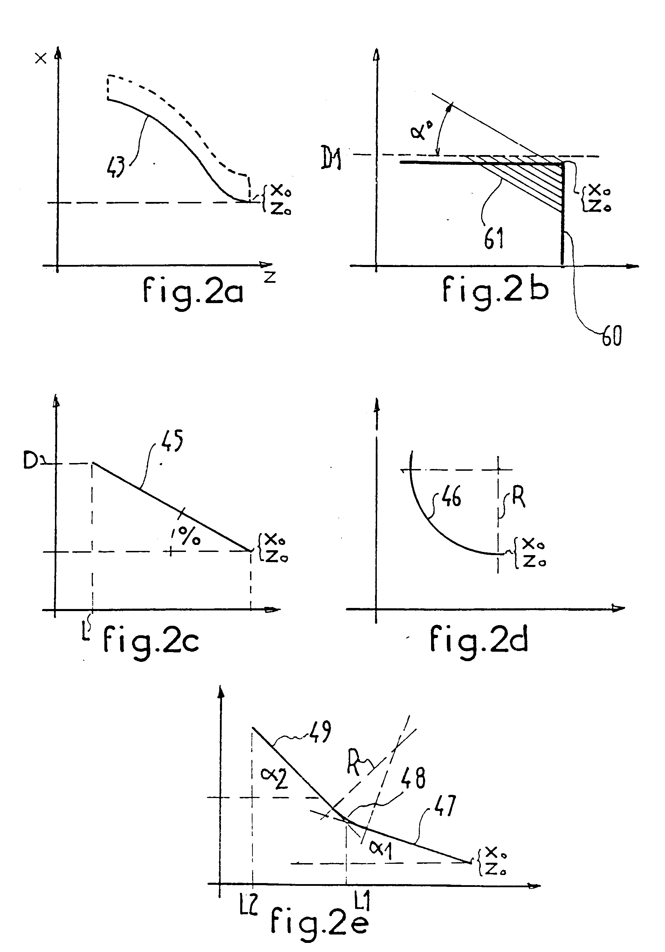

Sur la fig.2, sont représentés deux tableaux 21,25 du pupitre de commande précité.

Le tableau 21 comprend lui-même trois claviers : un clavier 22 dit de sélection des profils, un clavier 23 dit d'appel des paramètres d'usinage et un clavier numérique 24 d'introduction de la valeur numérique de ces derniers ; le tableau 21 comprend en outre un registre de poussoirs et de boutons, à savoir : poussoir de commande d'arrosage 26, de commande de rotation "avant" de la broche 27, de commande d'arrêt de broche 28, de commande de rotation "arrière" 29 de la broche, et un bouton 30 de commande de vitesse de broche.

Le tableau 25 est constitué par un registre de poussoir et de commutateurs destinés à la mise en oeuvre de la mémoire de l'automate, c'est-à-dire encore des moyens destinés à faire fonctionner le tour automatiquement suivant des cycles. Le registre du tableau 25 comprend :

– un poussoir 31 destiné à la mise en mémoire d'un cycle d'usinage (chariotage, cône, etc...) ou d'un point de passage obligatoire ; ce poussoir n'est utilisable qu'en mode "apprentissage".

– un poussoir 32 : suite à un appui sur ce poussoir tous les déplacements d'outils commandés à l'aide du manipulateur et des manivelles au cours d'usinage d'une première ébauche, seront effectués en vitesse rapide sur les suivantes suivant une trajectoire rectiligne entre les différents points de passage mémorisés ; à défaut d'appui sur ce poussoir, la vitesse de déplacement de l'outil sera celle de l'opération d'usinage enregistrée précédemment ; ce poussoir n'est utilisable qu'en mode apprentissage.

– un commutateur à trois positions 33 : une position dite "normale" dans laquelle le tour est utilisé de façon classique avec les seules manivelles et sans possibilité de mémorisation ; une position dite "d'apprentissage" dans laquelle le maniement du tour est identique au maniement en mode normal, et dans laquelle s'effectue la mise en mémoire des cycles d'usinage et des déplacements de l'outil ; une position dite "de mémoire" dans laquelle le tour répète automatiquement l'ensemble des mouvements d'usinage d'une pièce qui ont été enregistrés en mode apprentissage.

– un poussoir 34 commandant le départ du cycle d'usinage quant on est en mode "mémoire",

– un poussoir 35 destiné à provoquer l'arrêt des avances d'usinage au cours de l'exécution automatique d'un cycle ; la reprise de l'exécution du cycle s'effectue par une nouvelle poussée sur le poussoir 34.

On doit maintenant comprendre que les touches du clavier 22 de sélection de profil forment avec l'automate les moyens, dits premiers moyens, définis plus haut et que les touches des claviers 23 d'appel de paramètres, et 24 d'introduction de la valeur numérique de ceux-ci constituent les moyens dits deuxièmes définis plus haut ; on décrira plus loin à l'aide d'exemples de fonctionnement les fonctions des touches des claviers 22 et 23.

On va maintenant décrire en relation avec les fig.2a à 2e comment est commandé le tour de l'invention au moyen des organes de commande de l'équipement mobile 5.

Sur la fig.2a, la courbe 40 représente une trajectoire quelconque de la pointe de l'outil tandis que la partie en pointillés représente la trajectoire de dégagement et de retour de l'outil à son point initial. On notera qu'une telle trajectoire quelconque ne figure pas parmi les trajectoires qui peuvent être sélectionnées. Au contraire, les fig.2c à 2e illustrent des trajectoires qui peuvent être sélectionnées ; la trajectoire 45 de la fig.2c, dite d'usinage de cône, ou conique ou à interpolation linéaire, est normalement définie par deux paramètres, par exemple de pente, exprimés en pourcentage ou en degré et par, soit un diamètre D d'usinage soit une longueur L d'usinage ; la trajectoire 46 de la fig.2d dite de rayon ou d'interpolation circulaire est définie par le paramètre de rayon (R) ; enfin la trajectoire de la fig.2e, dite trajectoire complexe, comprend une première trajectoire 47 à interpolation linéaire, une deuxième trajectoire 48 à interpolation circulaire et une troisième trajectoire 49 à interpolation linéaire ; les paramètres de définition de cette trajectoire seront par exemple les valeurs L1, $\alpha$1 pour la partie 47, L2 et $\alpha$2 pour la partie 49, et R pour la partie 48 ; on notera que le paramètre L1 est la longueur virtuelle de la première partie 47 à son intersection en 50 avec la troisième partie 49.

Sur la fig.2b, on a représenté différentes passes d'usinage sur une ébauche cylindrique 60 avec comme choix du profil d'usinage l'interpolation linéaire et comme paramètre $\alpha°$, et D1 ; la première opération, après avoir sélectionné le profil et introduit les paramètres, va consister à amener l'outil en position $x_o, z_o$ au moyen de manivelles 13 et 14 ; ensuite, le déplacement du manipulateur 15 en position 15a (fig.1a) va enclencher le déplacement de l'outil sur sa trajectoire jusqu'à ce qu'il atteigne le diamètre D1 ; à ce stade, il pourra revenir automatiquement à sa position $x_o, z_o$ et le manipulateur à sa position centrale ; par une seconde manipulation de manivelle de dressage, on amènera l'outil en position $x_1, z_o$ ; la mise en position 15 du manipulateur 15a enclenchera une deuxième passe de dressage de trajectoire parallèle à celle de la première et ainsi de suite jusqu'à obtention des cotes désirées.

Revenant au clavier du tableau 21 (fig.2) et à la trajectoire représentée en fig.2e, on va décrire les opérations nécessaires pour commander un tel usinage, en supposant que les opérations préliminaires habituelles de serrage de l'ébauche dans le mandrin, de mise en rotation de la broche, de choix d'une vitesse de broche, de commande d'arrosage, etc... aient été réalisées.

La suite des opérations peut être la suivante :

a) Introduction de la position initiale et des coordonnées d'outil :

On effectue des passes de positionnement en diamètre et en longueur puis on introduit ces valeurs mesurées et visualisées par la machine, dans l'automate en appuyant successivement sur les touches :
- 231 d'appel des cotation ($x_o$,$z_o$) de départ d'usinage, puis
- 232 d'appel de cotation en diamètre, puis
- 24 d'introduction au clavier de la valeur numérique de la cote du diamètre de départ ($x_o$), puis
- 233 de validation de la valeur numérique entrée précédemment, puis
- 234 d'appel de cotation en longueur, puis
- 24 d'introduction au clavier de la valeur numérique de la cote en longueur, de départ ($z_o$), puis
- 233 de validation de cette valeur numérique, puis
- 235 d'appel de prise en compte du rayon de plaquette d'usinage, puis
- 24 d'introduction de la valeur numérique du rayon de plaquette, puis
- 233 de validation de cette valeur numérique.

b) Sélection et cotation du profil d'usinage (ou trajectoire d'outil)

On appuie successivement sur les touches :
- 221 de sélection de l'interpolation linéaire (cône extérieure), (un second appui sur la touche 221 sélectionnerait un usinage intérieur, donc avec dégagement de l'outil vers l'axe de broche,
- 236 d'appel de cotation de la pente en degré ou en %, (236'), puis
- 24 d'introduction de la valeur numérique de la première pente, puis
- 233 de validation, puis
- 238 d'appel de l'avance par tour, puis
- 24 d'introduction de la valeur de l'avance par tour, puis
- 233 de validation, puis
- 234 d'appel de la cotation en longueur d'usinage, puis
- 24 d'introduction de la valeur de la longueur de sortie d'usinage, puis
- 233 de validation.

Cette suite d'opération définit la partie 47 (première partie) de la trajectoire de la fig.2e.

L'appui sur la touche 237 (R) indique à l'automate que cette trajectoire sera raccordée à une autre trajectoire. A ce stade, apparaît sur l'écran une figurine correspondant à l'usinage de deux pentes raccordées par un rayon.

On appuie alors sur les touches :
- 24 d'introduction de la valeur du rayon de raccordement,
- 233 de validation, puis
- 236 d'appel de la cotation de la seconde pente ($\alpha°$ ou %)
- 24 d'introduction de valeur de la pente, puis
- 233 de validation, puis
- 234 d'appel de la cotation en longueur d'usinage, puis
- 24 d'introduction de la valeur numérique de la longueur de sortie d'usinage, puis
- 233 de validation de la valeur numérique rentrée précédemment, puis
- 233 de validation pour valider l'ensemble de la page d'écran.

Cette suite d'opérations définit la partie 49 (seconde pente) de la trajectoire de la fig.2e.

Le profil ayant été ainsi défini, il suffira maintenant à l'opérateur d'enclencher le déplacement de l'outil au moyen du manipulateur 15 ; l'outil effectuera une première passe conforme à la trajectoire complète de la fig.2e puis se dégagera de l'ébauche ; la suite des opérations est la même que celle indiquée en relation avec la description de la fig.2b.

Une pression sur la touche 31 du registre 25 dite touche de mise en mémoire permettra la recopie par l'automate de toutes les opérations effectuées après l'enclenchement du manipulateur.

Une pression sur la touche 32 permet le dégagement de l'outil quel que soit le mode, intérieur ou extérieure, d'usinage et le sens du chariotage ; ce poussoir déclenche donc des moyens pour effectuer automatiquement des opérations qui manuellement consisteraient à mettre le manipulateur 15 en position centrale et à dégager l'outil au moyen des manivelles 13 et 14 ; bien entendu, grâce à l'automate l'opération est effectuée en un temps considérablement réduit par rapport à celui nécessité par les opérations manuelles.

Toujours sur la fig.2, on remarque une touche 239, dite de chanfrein à 45° ; l'appui sur cette touche remplace pour ce type de profil d'usinage assez fréquent, l'ensemble des opérations de sélection d'un profil.

Toujours sur la fig.2 et plus particulièrement sur le clavier 22 du tableau 21, on remarque que la touche 223 d'exécution du quatrième quart de cercle, voisine avec des touches 224, 225,226 d'exécution respectivement des troisième, deuxième et premier quarts de cercle et qu'une touche 227 de chariotage ou dressage permet de sélectionner l'une de ces opérations simples.

A titre d'exemple de dressage d'une face en plusieurs passes, la suite des opérations peut être la suivante :

c) introduction de la position initiale et des coordonnées d'outil (se reporter plus haut a).

b) sélection des profils d'usinage

On appuiera successivement sur les touches :

– 227 de sélection du chariotage ou du dressage,

– 232 d'appel de la cotation du diamètre indiquant que la trajectoire sera une trajectoire de dressage,

– 24 d'introduction de la valeur numérique du diamètre de sortie,

– 233 de validation de la valeur numérique introduite,

– 238 d'appel de l'avance par tour,

– 24 d'introduction de la valeur numérique de l'avance par tour,

– 233 de validation des valeurs numériques introduites.

Après cela, le passage du manipulateur 15 en position 15b enclenchera le déplacement de l'outil sur une trajectoire perpendiculaire à l'axe de broche jusqu'à ce qu'il arrive au diamètre introduit ; à partie de là, soit il s'arrêtera après avoir été dégagé de l'ébauche, soit il reviendra automatiquement à sa position initiale ; cet dernière alternative résulte de l'appui, consécutif à une validation, sur une touche 239 dite de répétition ; l'opérateur devra alors introduire une nouvelle position $z_o$ au moyen de la manivelle 13 et replacer le manipulateur en position 15b. L'appui sur une touche 241 provoque l'annulation des instructions précédentes y compris celles mémorisées. Une touche 242 est un contact non connecté disponible pour une fonction qui pourrait être rajoutée ultérieurement.

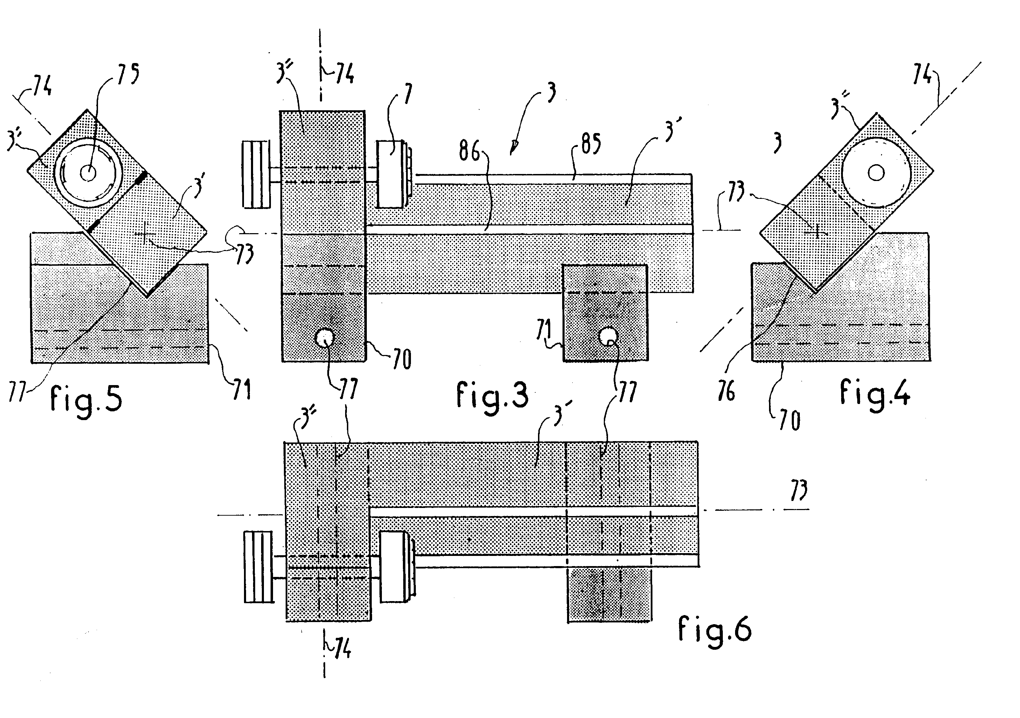

Sur les fig.3 à 6, il apparaît que le banc 3 est une pièce monobloc en L dont une partie 3′ dite porte coulisse a son axe 73 orienté horizontalement et dont une autre partie 3″ dite porte mandrin, ou poupée fixe, a son grand axe 74 perpendiculaire au précédent ; le plan formé par des axes 73 et 74 contient l'axe de broche 75 sur lequel est centré le mandrin 7 ; ce plan est avantageusement incliné à environ 60° sur l'horizontal, cet angle donnant à l'opérateur une visibilité optimale de l'outil ; il pourrait cependant avoir une inclinaison différente par exemple à 45° tel que représenté sur les figures. Cette position inclinée lui est conférée par le fait qu'il est disposé sur des socles 70 et 71 comportant chacun une échancrure 76, 77 resyectivement ; des joints en élastomère, non visibles sur les figures, sont disposés entre les faces d'appui du banc et des échancrures ; l'appui forcé du banc sur ces socles est réalisé au moyen de vis non représentées ; des canaux 77 traversent les socles à leur base le part en part pour permettre le passage de barres d'élinguage.

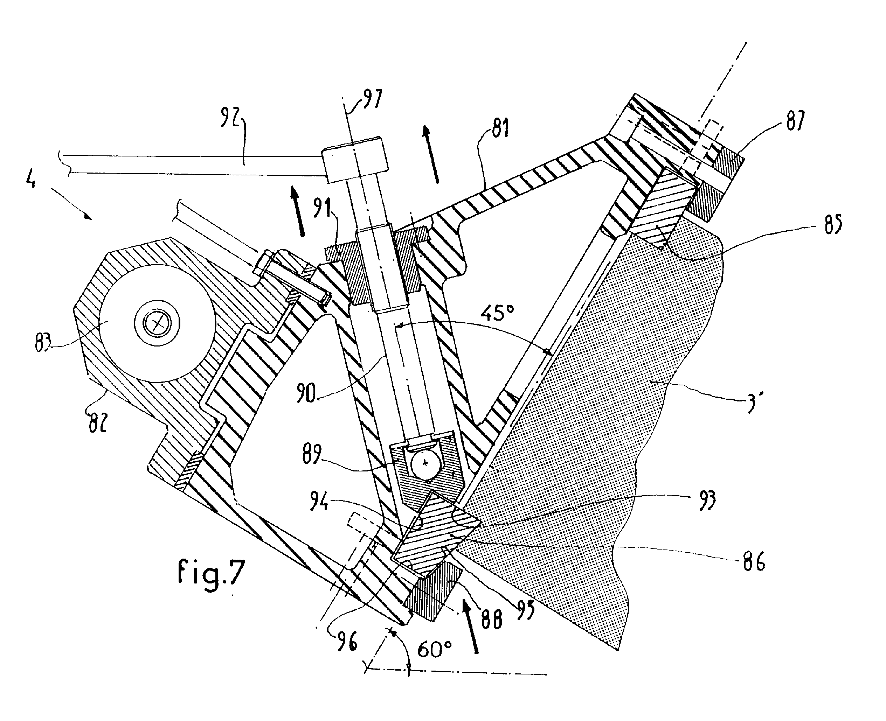

Sur la fig.7, la poupée mobile 4, vue en coupe, se compose d'une semelle 81 et d'un corps 82 formant fourreau de vis 83.

Suivant l'invention les glissières, dites respectivement en raison de leur forme "glissière plate" 85 et "glissière pentée" 86, fixées sur la partie horizontale 3′ du banc font largement saillie de part et d'autre de celle-ci.

La semelle comporte trois tampons destinés à glisser le long des glissières 85 et 86 et/ou à prendre appui sur elles : les tampons 87 et, 88, dits brides, sont solidaires de la semelle et fixes par rapport à elle tandis qu'un tampon 89, dit contre-bride, ou en raison de ses fonctions : tampon immobilisateur, est monté en palonnage simple en bout d'un arbre fileté 90 vissable dans une fourrure à trou taraudé 91 du bâti de la poupée mobile et manoeuvrable au moyen d'un levier 92. Les tampons 87 à 89 sont bien entendu des pièces allongées.

Il est remarquable que les brides 87 et 88 fixes par rapport à la semelle soient disposées au-dessous des glissières 85 et 86 tandis que le tampon immobilisateur 89 mobile par rapport à celle-ci est disposé au-dessus. Ainsi le tampon immobilisateur 89, comportant une rainure en V a son extrémité est destiné à prendre appui sur les faces dites respectivement intérieure 93 et supérieure 94 de la glissière pentée 86, tandis que la bride 88, comportant elle aussi une rainure en V est destinée à prendre appui sur les faces dites respectivement inférieure 95 et extérieure 96 de cette glissière.

Dès lors, l'immobilisation de la semelle, à l'inverse de ce qui est fait habituellement, résulte d'une traction sur elle dans un sens qui l'éloigne du banc 3′.

Il y a encore lieu d'observer sur cette figure l'inclinaison préférée à 60° du plan des glissières par rapport à l'horizontale et l'inclinaison à environ 45° de l'axe de vis 97 par rapport au plan des glissières.

## Revendications

1. Tour d'outillage, du genre de tour, dit parallèle dans lequel l'avance de l'outil est fonction de la rotation (n) du mandarin, permettant de réaliser notamment les opérations de chariotage (déplacement (z) de l'outil parallèle à l'axe de broche), de dressage (déplacement (x) de l'outil perpendiculaire à l'axe de broche), d'interpolation linéaire de filetage (déplacement rapide de l'outil en proportion de l'angle de rotation de la broche), de raccordement de cônes (succession d'une interpolation linéaire, d'une interpolation circulaire partielle et d'une seconde interpolation linéaire), ledit tour comportant des moyens de calcul et de commande numériques et réunis en un centre calculateur-opérateur, dit encore processeur ou automate, pour provoquer les déplacements de l'outil, ledit tour d'outillage pouvant comporter des moyens de mémorisation électronique d'un profil d'usinage et de recopiage de ce profil, "A" caractérisé : en ce qu'il incorpore :

– des moyens, dits premiers (22), pour sélectionner au moins un profil d'usinage, ou trajectoire de l'outil, parmi une pluralité de trajectoires élémentaires comprenant le chariotage, le dressage, la trajectoire à interpolation linéaire et la trajectoire à interpolation circulaire, le filetage,

– des moyens, dits deuxièmes (23, 24) pour, l'outil ayant été amené manuellement au moyen d'un couple de manivelles dans une position initiale ($x_o, z_o$), appeler un, ou successivement plusieurs paramètres de cette trajectoire dans le groupe de paramètres comprenant une longueur de chariotage, un diamètre final de passe de dressage, un angle de cône, un rayon d'usinage, un pas (avance par tour) de filetage, et pour, à la suite de l'appel d'un paramètre, introduire la valeur numérique de ce paramètre,

– des moyens, dits troisièmes (18), pour visualiser le type de profil d'usinage sélectionné, le ou les paramètres appelés et leurs valeurs numériques introduites, enfin

– des moyens, dits manipulateur (15), pour, un profil d'usinage au moins ayant été sélectionné et l'outil étant dans la position initiale, déclencher le déplacement de l'outil sur sa trajectoire ou inversement l'arrêter en un point quelconque de celle-ci ;

2. Tour selon la revendication 1, caractérisé :

en ce qu'il comporte en outre des moyens, dits quatrièmes (237), pour combiner au moins deux desdites trajectoires élémentaires et sélectionner ainsi une trajectoire complexe, lesdits quatrièmes moyens étant sous la dépendance d'une touche dudit clavier ;

3. Tour selon la revendication 2, dans lequel l'usinage est opéré par un outil constitué par une plaquette en alliage dur ayant un certain rayon et d'un porte-plaquette en alliage résilient, caractérisé :

par des moyens, dits cinquièmes, pour introduire dans l'automate le rayon de la plaquette, les cinquièmes moyens étant sous la dépendance d'au moins une touche (235) du clavier ;

4. Tour selon la revendication 3, caractérisé :

par des moyens, dits sixièmes, de mémorisation pour, une première série d'opérations ayant été réalisée sur une ébauche, mémoriser l'ensemble des mouvements de l'outil et pour, une autre ébauche identique à la première ayant été mise à la place de la première, reproduire sur cette autre ébauche l'ensemble des mouvements mémorisés ;

5. Tour selon l'une quelconque des revendications 1 à 4, caractérisé :

en ce que lesdits premiers aux sixièmes moyens sont des moyens numériques électroniques sous la dépendance d'un clavier, ces moyens étant regroupés dans l'automate, et

en ce qu'un couple de moteurs d'axe pilotés en boucle fermée sont commandés par ledit automate et sont destinés respectivement à déplacer l'outil suivant l'axe (x) pour l'un et à déplacer l'outil suivant l'axe (z) pour l'autre ;

6. Tour selon l'une quelconque des revendications précédentes, caractérisé :

en ce que ledit banc a une forme en L dont une partie, dite porte-coulisse (3'), a son grand axe (73) orienté horizontalement, et dont une autre partie dite porte-mandrin ou "poupée fixe" (3″) a son grand axe (74) perpendiculaire au précédent, le plan formé par lesdits grands axes (73,74) de chacune des parties (3',3″) étant incliné à environ 60° sur le plan horizontal ;

7. Tour selon la revendication 6, caractérisé :

en ce que ledit banc repose sur un couple de socles (70,71) en béton hydraulique, chaque socle étant pourvu d'une échancrure (76,77) pour loger le banc, des joints en élastomère étant disposés entre les faces en appui, l'appui forcé du banc sur ses socles étant réalisé au moyen de vis ;

8. Tour selon la revendication 7, comportant une contre-pointe, ou poupée mobile, pouvant se déplacer le long des glissières du banc ou inversement être immobilisée sur celles-ci, caractérisé :

en ce que l'immobilisation de la poupée mobile (4) résulte d'une traction sur les glissières dans un sens d'éloignement par rapport au banc (3') :

9. Tour selon la revendication 8, caractérisé :

en ce que, plus précisément, l'immobilisation de la poupée résulte d'une pression exercée sur l'une (88) des glissières, dite pentée, et le long de deux arêtes opposées de celle-ci, par deux tampons à rainure en V, l'un des tampons, dit bride (88), étant destiné à prendre appui sur les faces dites respectivement inférieure (95) et extérieure (96) de ladite glissière pentée, l'autre des tampons, dit tampon immobilisateur (89), étant destiné à faire pression sur les faces dites respectivement inférieure (93) et supérieure (94) de ladite glissière pentée, ledit tampon immobilisateur étant monté en bout d'un arbre fileté vissable tans un trou taraudé (91) du bâti de la poupée mobile et pourvu d'un levier de vissage (92).

10. Tour selon la revendication 5, caractérisé :

en ce qu'au moins les organes de contrôle et de commande (11 à 30), compris dans les premiers, deuxièmes et troisièmes moyens sont supportés par ledit trainard (5).

**Patentansprüche**

1. Drehbank, sogenannte Paralleldrehbank, bei welcher der Vorschub des Werkzeuges eine Funktion des Umlaufes (n) des Futters ist, um mit insbesondere die Arbeitsgänge des Langdrehens (Verfahren (z) des Werkzeuges parallel zur Spindelachse) des Abrichtens (Verfahren (x) des Werkzeuges senkrecht zur Spindelachse), der Linearen Interpolation, des Gewindeschneidens (rasches Verfahren des Werkzeuges in Bezug auf den Umlaufwinkel der Spindel), des Verbindens von Konen (folgen einer linearen Interpolation, einer partiellen Kreisinterpolation sowie einer zweiten linearen Interpolation) möglich sind, ferner mit Rechenvorrichtungen und numerischen Steuervorrichtungen, die in einem Rechen-Bedienungs-Zentrum untergebracht sind, dem sogenannten Prozessor oder Automaten, um das Verfahren des Werkzeuges auszulösen, ferner gegebenenfalls mit Mitteln zur Elektronenlagerung eines Bearbeitungsprofils und zum kopieren das Profil, kennzeichnet, durch die folgenden Merkmalen :

– Die Drehbank enthält sogenannte erste Mittel (2), um wenigstens ein Bearbeitungsprofil oder eine Bahn des Werkzeuges auszuwählen, aus einer Mehrzahl von Elementarbahnen, eingeschlossen das Langdrehen, das Abrichten, das Verfahren bei linearer Interpolation und das Verfahren bei zirkularer Interpolation, das Gewindeschneiden,

– es sind zweite Mittel vorgesehen (23,24) um nach dem Einstellen des Werkzeuges mittels eines Paares von Handgriffen in eine Ausgangsposition $(x_o,z_o)$ einer oder aufeinanderfolgend mehrere Parameter dieser Bahn abzurufen, darunter die Parameter der Länge des Längsdrehens, eines Enddurchmessers des Abrichtens, eines Konuswinkels, eines Bearbeitungsradius, einer Steigung (Vorschub pro Umlauf) des Gewindeschneidens, und, um Anschluß an das Abrufen eines Parameters, den numerischen Wert dieses Parameters einzuführen;

– es sind sogenannte Mittel vorgesehen (18), um den Typus des ausgewählten Arbeitsprofiles sowie den oder die abgerufenen Parameter und deren eingeführte numerische Werte zu visualisieren; es sind Mittel vorgesehen, ein sogenannter Manipulator (15), um

– nachdem wenigstens ein Bearbeitungsprofil ausgewählt und das Werkzeug in seine Ausgangsposition verbracht wurde - das Verfahren des Werkzeuges auf seiner Bahn auszulösen oder umgekehrt an irgendeinem Punkt der Bahn anzuhalten.

2. Drehbank nach Anspruch 1, dadurch gekennzeichnet,

daß diese unter anderem sogenannte vierte Mittel umfaßt (237), um wenigstens zwei der genannten elementaren Bewegungsbahnen zu kombinieren und somit eine komplexe Bewegungsbahn auszuwählen, wobei die genannten vierten Mittel durch Drücken einer Taste der betreffenden Tastatur ausgelöst werden.

3. Drehbank nach Anspruch 2, dadurch gekennzeichnet,

daß die Bearbeitung durch ein Werkzeug ausgeführt wird, das aus einer Platte aus einer Hartlegierung besteht, mit einem bestimmten Radius, ferner mit einer Trägerplatte aus einer elastischen Verbindung, und daß sogenannte fünfte Mittel vorgesehen sind, um den Radius der Platte in den Automaten einzuspeisen, wobei die fünften Mittel in Abhängigkeit von wenigstens einer Taste (235) der Tastatur ausgelöst werden.

4. Drehbank nach Anspruch 3, dadurch gekennzeichnet,

daß sogenannte sechste Mittel oder Speichermittel vorgesehen sind, um - nachdem eine erste Reihe von Arbeitsvorgängen an einem Werkstück vorgenommen wurde - die Gesamtheit der Bewegung des Werkzeuges einzuspeichern, und um, nachdem ein weiteres, mit dem ersten identisches Werkstück eingespannt ist, dieses weitere Werkstück den eingespeicherten Bewegungen des Werkzeuges zu unterwerfen.

5. Drehbank nach einem der Ansprüche 1 bis 4, dadurch gekennzeichnet,

daß die genannten ersten bis sechsten Mittel numerische, elektronische Mittel sind, die durch entsprechende Tastaturen ausgelöst werden, daß diese Mittel im Automaten vorgesehen sind, und daß ein Motorpaar mit in einem geschlossenen Regelkreis gesteuerten Wellen von dem Automaten gesteuert und jeweils dazu bestimmt sind,

das Werkzeug entsprechend der Achse (x) und entsprechend der Achse (z) zu verfahren.

6. Drehbank nach einem der Ansprüche 1 bis 5, dadurch gekennzeichnet,

daß die Bank die Gestalt eines L hat, deren einer Teil, nämlich der sogenannte Kulissenträger (3′) mit seiner grossen Achse (73) horizontal angeordnet ist, deren anderer Teil, der sogenannte Futterträger (3″) mit seiner grossen Achse (74) senkrecht zur erstgenannten Achse ausgerichtet ist, und dass die Ebene, durch die die beiden Achsen (73,74) verlaufen, unter etwa 60° gengen die Horizontalebene geneigt ist.

7. Drehbank nach Anspruch 6, dadurch gekennzeichnet,

daß die genannte Bank auf einem Paar Sokkeln (70, 71) aus hydraulischem Beton ruht, daß jeder Sockel eine Aussparung (76, 77) zur Aufnahme der Bank hat, daß elastomere Verbindungen zwischen den einander tragenden Flächen vorgesehen sind, und daß die Bank mit den Sockeln durch Schrauben verbunden ist.

8. Drehbank nach Anspruch 7, mit einem Reitstock, der auf den Gleitbahnen der Bank verfahren oder arretiert werden kann, dadurch gekennzeichnet,

daß die Arretierung dieses Reitstockes (4) durch einen Zug auf die Gleitbahnen bewirkt wird, und zwar in einem Sinne des Sich-Entfernens von der Bank (3′).

9. Drehbank nach Anspruch 8, dadurch gekennzeichnet,

daß das Fixieren des Reitstockes durch einen Druck ausgeübt wird, der auf eine (88) der Gleitbahnen, der sogenannten geneigten Bahn ausgeübt wird, und zwar entlang zweier einander entgegensetzter Rippen hiervon, durch zwei Stöpsel mit einer V-förmigen Nut, daß einer der Stöpsel der sogenannte Flansch (88) an der inneren Fläche (95) und an der äußeren Fläche (96) der geneigten Gleitbahn anliegt, während der andere Stöpsel, der sogenannte Fixierungsstöpsel (89) dazu bestimmt ist, Druck auf die innere Fläche (93) und auf die obere Fläche (94) der geneigten Gleitbahn auszuüben, und daß der Fixierungsstöpsel am Ende einer Gewindespindel montiert ist, die in eine Spindelhülse (91) des Gestelles des Reitstocks eingeschraubt und mit einem Betätigungshebel (92) versehen.

10. Drehbank nach Anspruch 5, dadurch gekennzeichnet,

dass mindestens die Steuervorrichtungen und die Triebwerke, die in den ersten, zweiten und dritten Mitteln umfasst sind, sind von dem sogenannten Bett (5) getragen.

## Claims

1. A tool lathe, of the so-called center lathe type, wherein the advance of the tool is a function of the rotation. (n) of the chuck, making it possible to perform particularly the operations of turning (displacement (z) of the tool parallel to the axis of the rod), of facing (displacement (x) of the tool perpendicular to the axis of the rod), of linear threading interpolation (rapid displacement of the tool in proportion to the angle of rotation of the rod), of taper joining (succession of a linear interpolation, of a partial circular interpolation and of a second linear interpolation), said lathe comprising means of calculation and digital control and located in a computer/operator center, also called a processor or automaton, in order to cause the displacements of the tool, it being possible for said tool lathe to comprise means to memorize electronically a machining contour and for copying this contour, which incorporates :
– means, called first means (2), for selecting at least one machining contour, or tool path, from a plurality of elementary paths comprising turning, facing, linear interpolation path and circular interpolation path and threading,
– means, called second means (23,24), in order to, when the tool has been brought manually by means of a pair of levers into an initial position $(x_0,z_0)$, call one or successively more parameters of :his path in the group of parameters comprising a turning length, a final facing pass diameter, an angle of taper, a machining radius, a threading pitch (advance per turn), and in order to, following the calling of one parameter, introduce the digital value of this parameter,
– means called third means (18), in order to display the type of machining contour selected, the parameter or parameters called and their digital values introduces, finally
– means, called handling means (15) in order to, a machining contour at least having been selected anf the tool being in the initial position, trigger the displacement of the tool on its path or alternatively to stop it at any point of the latter.

2. The lathe as claimed in claim 1,
which comprises, moreover, means called fourth means (237) in order to combine at least two of said elementary paths and to thereby select a complex path, said fourth means being controlled by a key of said keyboard.

3. The lathe as claimed in claim 2,
wherein machining is performed by a tool consisting of a hard alloy tip having a certain radius and of a tip-holder in a resilient alloy, comprising means, called fifth means, for entering into the automaton the radius of the tip, the fifth means being controlled by at least one key (235) of the keyboard.

4. The lathe as claimed in claim 3,
comprising memorizing means, called sixth means, in order to, once a first series of operations has been performed on a blank, memorize the set of movements of the tool and in order to, once another blank which is substantially identical to the first has replaced the first, reproduce on this other blank the set of memorized movements.

5. The lathe as claimed in any one of the claims 1 to 4,
wherein said first to sixth means are electronic digital means controlled by a keyboard, these means being assembled in the automaton, and wherein a pair of motors of an axis which are controlled in a closed loop are controlled by said automaton and are intended, respectively,
to displace the tool according to the axis (x) for one and to displace the tool according to the axis (z) for the other.

6. The lathe as claimed in any one of the preceding claims, wherein said bed has an L-shape, of which one part, called slide-holder (3'), has its large axis (73) oriented horizontally, and of which another part, called chuckholder or "fixed head-stock" (3") has its large axis (74) perpendicular to the previous axis, the plane formed by said large axes (73,74) of each of the parts (3',3") being inclined at approximately 60° to the horizontal plane.

7. The lathe as claimed in claim 6, wherein said bed rests on a pair of bases (70,71) in hydraulic concrete, each base being provided with a recess (76,77) for accommodating the bed, elastomer joints being disposed between the supporting faces, the forced support of the bed on its bases being achieved by means of a screw.

8. The lathe as claimed in claim 7, comprising a tailstock, or movable headstock, which may be displaced along the guide ways of the bed or alternatively be immobilized on the latter, wherein the immobilization of the movable headstock (4) results from a traction on the guide ways in a direction away from the bed (3′).

9. The lathe as claimed in claim 8, wherein, more precisely, the immobilization of the headstock results from a pressure exerted on one (88) of the guide ways, called an inclined guide way, and along two opposite edges of the latter, by two buffers with a V-shaped groove, one on the buffers, called a flange (88), being intended to bear on the faces called lower face (95) and outer face (96), respectively, of said inclined guide way the other of the buffers, called immobilizing buffer (89), being intended to put pressure on the faces called inner face (93) and upper face (94), respectively, of said inclined guide way, said immobilizing buffer being mounted at the end of a threaded shaft which may be screwed into a tapped hole (91) of the frame of the movable headstock and which is provided with a screwing lever (92).

10. The lathe as claimed in claim 5, wherein at least the control and command means (11 to 30) included in the first, second and third means are supported by the said saddle (5).

fig.1

EP 0 299 046 B1

Fig.2

fig.2a

fig.2b

fig.2c

fig.2d

fig.2e

fig.5

fig.3

fig.4

fig.6

EP 0 299 046 B1

fig.7

EP 0 299 046 B1